(19) Europäisches Patentamt / European Patent Office / Office européen des brevets

(11) **EP 3 079 216 A1**

(12) **EUROPEAN PATENT APPLICATION**
published in accordance with Art. 153(4) EPC

(43) Date of publication:
**12.10.2016 Bulletin 2016/41**

(51) Int Cl.:
*H02J 3/38* (2006.01)     *H02J 3/32* (2006.01)
*H02J 7/35* (2006.01)

(21) Application number: **14867390.8**

(22) Date of filing: **02.12.2014**

(86) International application number:
**PCT/JP2014/006025**

(87) International publication number:
**WO 2015/083373 (11.06.2015 Gazette 2015/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.12.2013   JP 2013249687**

(71) Applicant: **Kyocera Corporation**
**Kyoto-shi, Kyoto 612-8501 (JP)**

(72) Inventor: **SATAKE, Masaomi**
**Kyoto-shi, Kyoto 612-8501 (JP)**

(74) Representative: **Schwabe - Sandmair - Marx**
**Patentanwälte Rechtsanwalt**
**Partnerschaft mbB**
**Joseph-Wild-Straße 20**
**81829 München (DE)**

(54) **POWER CONTROL SYSTEM, POWER CONTROL DEVICE, AND METHOD FOR CONTROLLING POWER CONTROL SYSTEM**

(57)     In order to construct a system that can manage efficient operation control among a plurality of distributed power sources without impairing versatility of the distributed power source side, the disclosed power control system includes a power generation device 33 that generates power while a current sensor 40 detects forward power flow, a power control device 20 that has an output portion 26 capable of outputting power from the other distributed power sources 12 while the power generation device 33 and the other distributed power sources 12 are disconnected from a grid and a dummy output system 50 capable of supplying, by output from at least one of the output portion 26 and the power generation device 33, dummy current that can be detected as current in the same direction as forward power flow by the current sensor 40. The power control system further includes an independent operation switch 24 that is disposed between the power generation device 33 and the other distributed power sources 12, and is turned off during interconnected operation and is turned on during independent operation by the distributed power sources, and a synchronous switch 52 that flows dummy current synchronously with the independent operation switch 24 when the independent operation switch 24 is on.

*FIG. 6*

EP 3 079 216 A1

# EP 3 079 216 A1

**Description**

CROSS-REFERENCE TO RELATED APPLICATION

This application claims priority to and the benefit of Japanese Patent Application No. 2013-249687 filed on December 2, 2013, the entire contents of which are incorporated herein by reference.

TECHNICAL FIELD

This disclosure relates to a power control system, a power control device and a method for controlling a power control system.

BACKGROUND

As a power control device for power generation in a power generation system that includes power generating equipment, such as a solar panel or the like, known devices allow for grid interconnected operation that outputs AC power while interconnected with a commercial power grid (hereinafter abbreviated as "grid" as appropriate) and independent operation that outputs AC power without being interconnected with the grid (see, for example, PLT 1).
Further, as a power control device for power storing in a storage system that includes power storing equipment such as a storage cell, or the like, that is charged by the power grid, as in the case with the above described power control device for power generation, known devices allow for grid interconnected operation that outputs AC power while interconnected with the grid and independent operation that outputs AC power without being interconnected with the grid (see, for example, PLT 2).

CITATION LIST

Patent Literature

PTL 1: JP 2007-049770 A
PTL 2: JP 2008-253033 A

SUMMARY

(Technical Problem)

Power control systems are required to integrally manage and operate a plurality of distributed power sources such as photovoltaic cells, storage cells, fuel cells, gas powered generators or the like. There is particular demand for the construction of a system that can manage efficient operation control among a plurality of distributed power sources without impairing the versatility of the distributed power source side.
It would therefore be helpful to provide a power control system, a power control device and a method for controlling a power control system that can manage efficient operation control among a plurality of distributed power sources without impairing the versatility of the distributed power source side.

(Solution to Problem)

In order to solve the above problem, a power control system according to this disclosure includes:

a power generation device that generates power while a current sensor detects forward power flow;
a power control device having an output portion capable of outputting power from other distributed power sources while the power generation device and the other distributed power sources are disconnected from a grid; and
a dummy output system capable of supplying, by output from at least one of the output portion and the power generation device, dummy current that can be detected by the current sensor as current in the same direction as forward power flow;
the power control system further includes:

an independent operation switch that is disposed between the power generation device and the other distributed

2

power sources, and is turned off during interconnected operation and is turned on during independent operation by the distributed power sources; and

a synchronous switch that passes the dummy current in synchronization with the independent operation switch while the independent operation switch is turned on.

Furthermore, it is preferred that:

the distributed power source include a storage cell;

the dummy output system is configured to select at least two values of dummy current and supply them; and

when the storage cell is fully charged, among the at least two values of dummy current, a small current value is selected.

Moreover, it is preferred that, among the at least two values of dummy current, a large current value $i_1$[A] satisfy a relation of $i_1 > X/(Vg)$ (Vg is output voltage [V] from the power generation device) with a predetermined value X[W] specified by the characteristic of the power generation device, and a small current value $i_2$[A] satisfy a relation of $i_2 < X/(Vg)$ with the predetermined value X[W].

Furthermore, it is preferred that:

the dummy current is supplied to the current sensor by winding the current sensor with a wire by a predetermined number of turns (times), through the wire the dummy current being supplied in the dummy output system; and

among the at least two values of dummy current, a large current value $i_1$[A] satisfy a relation of $I_1 > X/(n \bullet Vg)$ (Vg is output voltage [V] from the power generation device) with a predetermined value X[W] specified by the characteristic of the power generation device, and a small current value $i_2$[A] satisfy a relation of $i_2 < X/(n \bullet Vg)$ with the predetermined value X[W].

Moreover, it is preferred that the dummy output system is configured by connecting in parallel two or more combinations of a resistance and a switch connected in series.

Furthermore, it is preferred that the at least two values of dummy current have three values of dummy current, and among the three values of dummy current, the largest current value $i_3$[A] satisfy a relation of $i_3 > Y/(Vg)$ (Vg is output voltage [V] from the power generation device) with a predetermined value Y[W] specified by a power generation starting current value of the power generation device, the second largest current value $i_1$[A] satisfy a relation of $i_1 > X/(Vg)$ and $i_1 < Y/(Vg)$ with a predetermined value X[W] specified by the characteristic of the power generation device and the predetermined value Y[W], and the smallest current value $i_2$[A] satisfy a relation of $i_2 < X/(Vg)$ with the predetermined value X[W].

Moreover, it is preferred that:

the dummy current is supplied to the current sensor by winding the current sensor with a wire by a predetermined number of turns (times), through the wire the dummy current being supplied in the dummy output system;

the at least two values of dummy current have three values of dummy current; and

among the three values of dummy current, the largest current value $i_3$[A] satisfy a relation of $i_3 > Y/(n \bullet Vg)$ (Vg is output voltage [V] from the power generation device) with a predetermined value Y[W] specified by the power generation starting current of the power generation device, the second largest current value $i_1$[A] satisfy a relation of $i_1 > X/(n \bullet Vg)$ and $i_1 < Y/(n \bullet Vg)$ with a predetermined value X[W] specified by the characteristic of the power generation device and the predetermined value Y[W], and the smallest current value $i_2$[A] satisfy a relation of $i_2 < X/(n \bullet Vg)$ with the predetermined value X[W].

Furthermore, in order to solve the above problem, a power control device according to this disclosure is used by a power control system having a power generation device that generates power while a current sensor detects forward power flow and other distributed power sources, the power control device includes:

an output portion capable of outputting power from the other distributed power sources while the power generation device and the other distributed power sources are disconnected from a grid, wherein dummy current in the same direction as forward power flow can be supplied to the current sensor by output from at least one of the output portion and the power generation device;

an independent operation switch that is turned off during interconnected operation and is turned on during independent operation by the distributed power sources, wherein the independent operation switch is disposed between the power generation device and the other distributed power sources; and

a controller that controls synchronously with the independent operation switch to pass dummy current while the independent operation switch is turned on.

Furthermore, in order to solve the above problems, a method for controlling a power control system according to this disclosure is for controlling a power control system that has a power generation device that generates power while a current sensor detects forward power flow and other distributed power sources, includes the steps of:

outputting power from the other distributed power sources while the power generation device and the other distributed power sources are disconnected from a grid;
supplying, by output from at least one of the power generation device and the other distributed power sources, dummy current in the same direction as forward power flow to the current sensor;
turning off an independent operation switch disposed between the power generation device and the other distributed power sources during interconnected operation;
turning on the independent operation switch during independent operation; and
turning on a synchronous switch that flows dummy current when the independent operation switch is turned on.

(Advantageous Effect)

According to the disclosed power control system, power control device and method for controlling a power control system, it is possible to manage efficient operation control among a plurality of distributed power sources without impairing the versatility of the distributed power source side.

BRIEF DESCRIPTION OF THE DRAWINGS

In the accompanying drawings:

FIG. 1 is a block diagram of a power control system according to a first embodiment of this disclosure;
FIG. 2 is a diagram illustrating wiring of a dummy output system of the power control system according to the first embodiment of this disclosure;
FIG. 3 is a diagram illustrating wiring among a current sensor, a grid and a dummy output system in the power control system according to the first embodiment of this disclosure;
FIG. 4 is a diagram illustrating an example of control in the power control system during interconnected operation according to the first embodiment of this disclosure;
FIG. 5 is a diagram illustrating an example of control in the power control system during independent operation according to the first embodiment of this disclosure;
FIG. 6 is a diagram illustrating an example of control in the power control system during independent operation according to the first embodiment of this disclosure;
FIG. 7 is a diagram illustrating an example of control in the power control system during independent operation (upon completion of charging a storage cell) according to the first embodiment of this disclosure;
FIG. 8 is a block diagram illustrating a power control system according to the other embodiment;
FIG. 9 is a diagram illustrating wiring of a dummy output system of a power control system according to the other embodiment;
FIG. 10 is a diagram illustrating an example of control in the power control system during interconnected operation according to the other embodiment of this disclosure;
FIG. 11 is a diagram illustrating an example of control in the power control system during independent operation according to the other embodiment of this disclosure;
FIG. 12 is a diagram illustrating an example of control in the power control system during independent operation according to the other embodiment of this disclosure; and
FIG. 13 is a diagram illustrating an example of control in the power control system during independent operation (upon completion of charging a storage cell) according to the other embodiment of this disclosure.

DETAILED DESCRIPTION

The embodiments of this disclosure will be described in detail below with reference to the drawings.

(First Embodiment)

First, a power control system according to the first embodiment of this disclosure is described. In addition to power supplied by the grid (commercial power grid), the power control system according to this embodiment includes a distributed power source that supplies sellable power and/or a distributed power source that supplies unsellable power. The distributed power source that supplies sellable power is, for example, a system that supplies power by photovoltaic power generation or the like. On the other hand, the distributed power source that supplies unsellable power is, for example, a storage cell system that can charge and discharge power, a fuel cell system that includes a fuel cell such as a Solid Oxide Fuel Cell (SOFC), a gas powered generator system that generates power with gas fuel, or the like. This embodiment illustrates an example of a system that includes a photovoltaic cell as a distributed power source that supplies sellable power, a storage cell as a distributed power source that supplies unsellable power and a power generation device, which is a fuel cell or a gas powered generator.

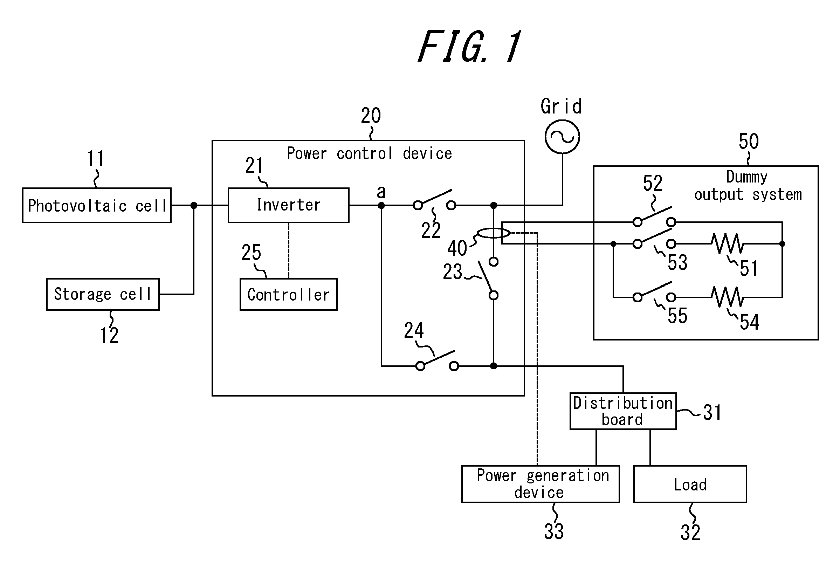

FIG. 1 is a block diagram illustrating a schematic configuration of the power control system according to the first embodiment of this disclosure. The power control system according to this embodiment includes a photovoltaic cell 11, a storage cell 12, a power control device 20 (power control device), a distribution board 31, a load 32, a power generation device 33, a current sensor 40 and a dummy output system 50. Here, the power generation device 33 is configured with a fuel cell or a gas powered generator. The power control system normally performs interconnected operation with the grid and supplies power supplied by the grid and power supplied by each distributed power source (the photovoltaic cell 11, the storage cell 12 and the power generation device 33) to the load 32. Furthermore, the power control system performs independent operation when there is no power supply from the grid, such as during a power outage, and supplies power from each distributed power source (the photovoltaic cell 11, the storage cell 12 and the power generation device 33) to each load (the load 32, a first dummy current load 51 and a second dummy current load 54). When the power control system performs independent operation, each distributed power source (the photovoltaic cell 11, the storage cell 12 and the power generation device 33) is disconnected from the grid, and when the power control system performs interconnected operation, each distributed power source (the photovoltaic cell 11, the storage cell 12 and the power generation device 33) is connected to the grid in parallel.

In FIG. 1, the solid lines connecting each functional block represent wiring through which power flows, the dash line connecting each functional block represents the flow of control signals or of communicated information. The communication indicated by the dashed line may be wired communication or wireless communication. A variety of methods, including a hierarchical structure, may be employed for control signals and communication of information. For example, a short distance communication method such as ZigBee® or the like may be employed. Furthermore, a variety of transmission media may be used, such as infrared communication, Power Line Communication (PLC), or the like. Then, above the lower layers that include the physical layers appropriate for each type of communication, a variety of communication protocols prescribed only for logical layers, such as ZigBee SEP2.0 (Smart Energy Profile 2.0), ECHONET Lite®, or the like, may be used.

The photovoltaic cell 11 converts photovoltaic energy into DC power. In the photovoltaic cell 11, for example, power generating portions that have a photoelectric conversion cell are connected in a matrix and output a predetermined short-circuit current (for example, 10 A). The photovoltaic cell 11 may be of any type capable of photoelectric conversion, such as a silicon-based polycrystalline photovoltaic cell, a silicon-based monocrystalline photovoltaic cell, a CIGS or other thin-film photovoltaic cell, or the like.

The storage cell 12 is configured with a storage cell such as a lithium-ion cell, a nickel-hydrogen cell, or the like. The storage cell 12 can supply power by discharging the power charged in the storage cell 12. In addition to the power supplied by the grid or the photovoltaic cell 11, the storage cell 12 can also be charged with power supplied by the power generation device 33, as described below.

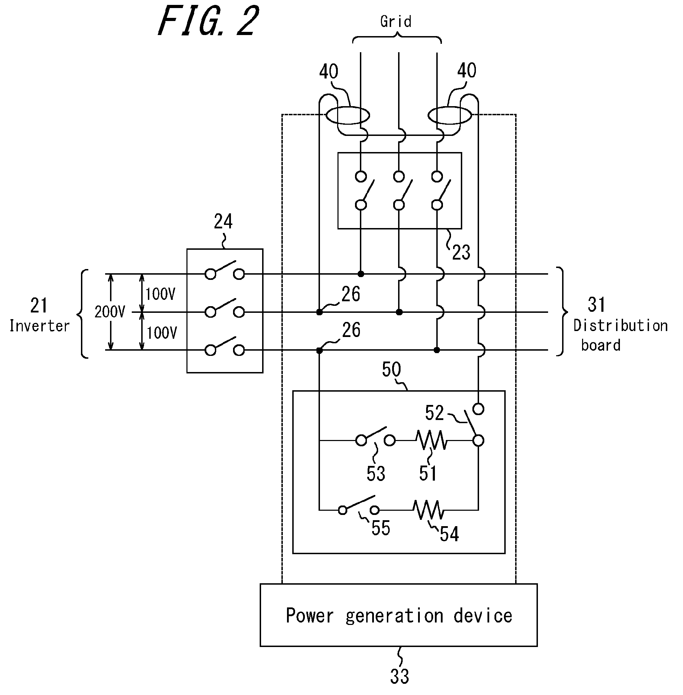

The power control device 20 converts the DC power supplied by the photovoltaic cell 11 and the storage cell 12 and the AC power supplied by the grid and the power generation device 33 and also performs control to switch between interconnected operation and independent operation. The power control device 20 includes an inverter 21, interconnected operation switches 22 and 23, an independent operation switch 24, and a controller 25 that controls the entire power control device 20. The power control device 20 also includes an output portion 26 (see FIG. 2) that supplies AC power to the dummy output system 50 described below. The interconnected operation switch 23 may be disposed outside the power control device 20.

The inverter 21 is a two-way inverter that converts the DC power supplied by the photovoltaic cell 11 and the storage cell 12 into AC power, and converts the AC power supplied by the grid and the power generation device 33 into DC power. A converter may be provided at an input stage of the inverter 21 to raise the voltage of the DC power from the photovoltaic cell 11 and the storage cell 12 to a certain voltage.

The interconnected operation switches 22 and 23 and the independent operation switch 24 are configured with relays, transistors, or the like, and are controlled to be on or off. As illustrated, the independent operation switch 24 is disposed between the power generation device 33 and the storage cell 12. The interconnected operation switches 22 and 23 and the independent operation switch 24 are switched in synchronization so that both are not turned on (or off) simultaneously. In greater detail, when the interconnected operation switches 22 and 23 are turned on, the independent operation switch 24 is synchronously turned off, and when the interconnected operation switches 22 and 23 are turned off, the independent operation switch 24 is synchronously turned on. Synchronous control of the interconnected operation switches 22 and 23 and the independent operation switch 24 is implemented with hardware by having the wiring for the control signal to the interconnected operation switches 22 and 23 branch to the independent operation switch 24. For each switch, the on and off states may of course be set separately for the same control signal. The synchronization control of the interconnected operation switches 22 and 23 and the independent operation switch 24 may also be implemented with software by the controller 25. However, as an exception of the above described control, when the power control device is in on state, only the interconnected operation switch 23 is turned on and both the interconnected operation switch 22 and the independent operation switch 24 are turned off, and only power supply from the grid to the distribution board is performed.

The controller 25 is configured with a microcomputer, for example, and controls operations of the inverter 21, interconnected operation switches 22 and 23, independent operation switch 24, or the like, based on conditions such as an increase in grid voltage, a power outage, or the like. During interconnected operation, the controller 25 switches the interconnected operation switches 22 and 23 on and the independent operation switch 24 off. Furthermore, during independent operation, the controller 25 switches the interconnected operation switches 22 and 23 off and the independent operation switch 24 on.

During interconnected operation, the distribution board 31 divides power supplied by the grid into a plurality of branches for distribution to the load 32. Furthermore, during independent operation, the distribution board 31 divides power supplied by the plurality of distributed power sources (the photovoltaic cell 11, the storage cell 12 and the power generation device 33) into a plurality of branches for distribution to the load 32. Here, the load 32 is a power load that consumes power. Examples include electrical appliances used in the home, such as an air conditioner, microwave oven, or television; and machines and lighting used in industrial and commercial facilities, such as air conditioning equipment, lighting fixtures, and the like.

The power generation device 33 is configured with a fuel cell or a gas powered generator. The fuel cell includes a cell that uses hydrogen to generate DC power via a chemical reaction with oxygen in the air, an inverter that converts the generated DC power into 100 VAC or 200 VAC power, and auxiliary components. Here, the fuel cell as the power generation device 33 is a system that can supply AC power to the load 32 without the power control device 20. Accordingly, the fuel cell is not necessarily designed by assuming connection with the power control device 20 and may be a versatile system. The gas powered generator generates power with a gas engine that uses a predetermined gas or the like as fuel.

The power generation device 33 generates power while the corresponding current sensor 40 detects forward power flow (current in the power buying direction), and when generating power, performs a load following operation to follow the power consumption of the load 32 or a rated operation at a predetermined rated power value. The load following range during the load following operation is, for example, 200 W to 700 W, and the rated power value during a rated operation is, for example, 700 W. The power generation device 33 may perform a load following operation to follow the power consumption of the load 32 during interconnected operation and perform a load following operation or a rated operation at a rated power during independent operation.

The current sensor 40 detects current flowing between the grid and the power generation device 33. In Japan, power generated by the power generation device 33 is prescribed as being unsellable. Therefore, when the current sensor 40 detects reverse power flow (current in the power selling direction) to the grid side, the power generation device 33 stops generating power. While the current sensor 40 detects forward power flow, the power generation device 33 generates power by a load following operation or a rated operation assuming that the power generation device 33 can supply its own power to the load 32. As described below, from the perspective of power consumption, it is preferred that the current sensor 40 is disposed in the power control device 20 at a location through which current generated by the power generation device 33 does not flow during independent operation.

Here, the power control system according to this embodiment passes current (dummy current) in the same direction as dummy forward power flow to the current sensor 40 through the dummy output system 50 while the power generation device 33 and the storage cell 12 are disconnected from the grid, which allows the power generation device 33 to perform a rated operation and the storage cell 12 to store the power generated by the power generation device 33. The following describes power storage of dummy current through the dummy output system 50 in detail.

The dummy output system 50 can supply dummy current in the same direction as the forward power flow to the current sensor 40. The dummy output system 50 is a system that receives power supplied by the output portion 26 of the power control device 20 or the power generation device 33, and includes a first dummy current load 51, a second dummy current load 54, a synchronous switch 52, a first dummy current control switch 53 and a second dummy current control switch 55. FIG. 2 illustrates wiring of the dummy output system 50. In FIG. 2, the grid is a 200 V, single-phase three-wire system. In this case, one of the voltage wires and the neutral wire are connected to the dummy output system 50 at the output portion 26. As illustrated, the wires connected to the dummy output system 50 are disposed so that each passes through the current sensor 40 disposed at each of the two voltage wires. The dummy output system 50 may be configured integrally with the power control device 20 or may be configured independently from the power control device 20.

The first dummy current load 51 and the second dummy current load 54 are appropriately provided to adjust current inside the dummy output system 50 and have resistant values different from each other. As the first dummy current load 51 and the second dummy current load 54, the load outside the dummy output system 50 may be used. The synchronous switch 52 is provided for providing a portion of the power supplied from the power control device 20 or the power generation device 33 to the dummy output system to the current sensor 40 as dummy current in the same direction as forward power flow. The first dummy current control switch 53 and the second dummy current control switch 55 are provided for preventing unnecessary power generation due to the dummy current. The synchronous switch 52, the first dummy current control switch 53 and the second dummy current control switch 55 are configured respectively with independent relay, transistor, or the like, and are independently controlled to be on or off by the controller 25 of the power control device 20.

As illustrated in FIGS. 1 and 2, the first dummy current load 51 and the first dummy current control switch 53 are connected in series, and when both the synchronous switch 52 and the first dummy current control switch 53 are turned on, dummy current flows to the first dummy current load 51. The second dummy current load 54 and the second dummy current control switch 55 are also connected in series, and when both the synchronous switch 52 and the second dummy current control switch 55 are turned on, dummy current flows to the second dummy current load 54. As described above, the first dummy current load 51 and the second dummy current load 54 have resistance values different from each other, and two values of dummy current can be switched depending on which of the first dummy current control switch 53 and the second dummy current control switch 55 is turned on and be set. As described below, the two values of dummy current are switched therebetween depending on the power generation state, or the like, of the power generation device.

The synchronous switch 52 is controlled to be on and off in synchronization with the independent operation switch 24 of the power control device 20. That is, as in the case with the independent operation switch 24, the synchronous switch 52 is off during interconnected operation and is on during independent operation. In greater detail, the synchronous switch 52 switches between disconnection from and parallel connection with the grid synchronously. The synchronous switch 52 passes dummy current when disconnected and does not pass dummy current when connected in parallel. Synchronous control of the independent operation switch 24 and the synchronous switch 52 is implemented with hardware by having the wiring for the control signal to the independent operation switch 24 branch to the synchronous switch 52. The synchronization control of the independent operation switch 24 and the synchronous switch 52 may also be implemented with software by the controller 25.

Output from the power generation device 33 can be charged in the storage cell 12 during independent operation. When charging is not complete, the first dummy current control switch 53 is turned on and the second dummy current control switch 55 is turned off, which allows a dummy current value to be set to a large value. On the other hand, when charging of the storage cell 12 is complete, the first dummy current control switch 53 is turned off and the second dummy current control switch 55 is turned on, which allows a dummy current value to be set to a small value. Here, when charging of the storage cell 12 is complete means that when power of a predetermined value or more is charged in the storage cell 12. The controller 25 may be configured so that it can determine whether charging is complete or not via communication with the storage cell 12. When charging of the storage cell 12 is complete during independent operation, then the first dummy current control switch 53 is turned off and the second dummy current control switch 55 is turned on, the dummy current flowing in current sensor 40 decreases, thereby allowing the power generation device 33 to suspend unnecessary power generation.

The two values of dummy current are described below. The rated power value of the power generation device 33 in the power control system of this embodiment is 700W, which includes a 5% power detection error, which is 35W. Therefore, for example, as a control target current value of the power generation device 33, forward power flow current 35W is set, and as a result of this, the power generation device 33 operates so that it maintains forward power flow and also decreases power supplied by the grid as much as possible to provide power to the load through power generation by the power generation device itself. Furthermore, when the detected forward power flow value converted into output power is 35W or less, the amount of power generated by the power generation device is decreased, and power generation is eventually suspended.

Thus, in this embodiment, two values of dummy current are provided so that, when the large dummy current value is selected, the dummy current detected by the current sensor and converted into output power is larger than 35W, which is the control target value, and when the small dummy current value is selected, the dummy current detected by the current sensor and converted into output power is smaller than 35W, which is the control target value. Thus, when the large dummy current value is selected, the power generation device 33 detects the dummy current that is larger than the control target value by the current sensor and starts power generation. On the other hand, when the small dummy current value is selected, the power generation device 33 suspends power generation since the dummy current detected by the current sensor is below the control target value all the time. However, since the current sensor continues to detect a little forward power flow, a current sensor misconnection error does not occur.

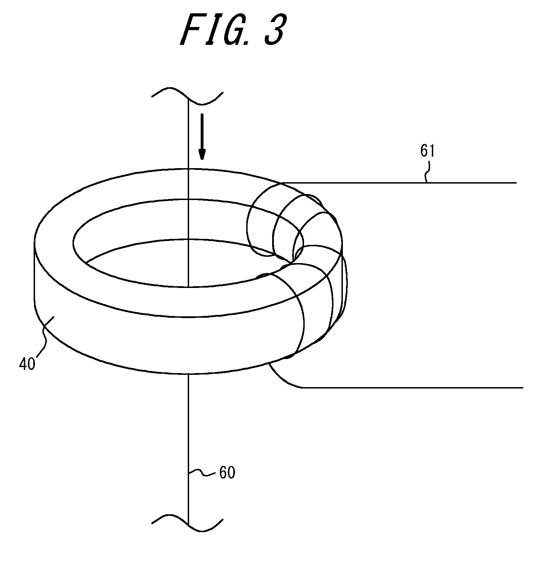

FIG. 3 is a diagram illustrating connection between the current sensor 40 and the grid and the dummy output system 50. For the ring-shaped current sensor 40, a grid power line 60 from the grid passes through the center thereof, and a dummy output wire 61 from the dummy output system 50 is wound therearound by a predetermined number of turns. The larger the number of turns of the dummy output wire 61 wound around the current sensor 40, the greater the current flowing in the forward power direction detected with a minute dummy current.

Next, the determination method of two values of dummy current is described. In this embodiment, when a large dummy current value is selected, it is intended to generate a dummy current $I_1$ equivalent to the output power of 100W, which is larger than the control target value (a predetermined value X) of 35W, and when a smaller dummy current value is selected, it is intended to generate a dummy current $I_2$ equivalent to the output power of 20W, which is smaller than the control target value (a predetermined value X) of 35W. The output voltage (Vg) of the power generation device is 200 VAC, and assuming that the number of turns (n) of the dummy output wire 61 wound around the current sensor is 10, the dummy currents $I_1$ and $I_2$ to be generated by the dummy output system 50 can be found respectively by the following formulae.

$$I_1 = 100/200/10 = 0.05[A] \quad \text{Formula (1)}$$

$$I_2 = 20/200/10 = 0.01 \, [A] \quad \text{Formula (2)}$$

Next, the determination method of the resistance value $R_1$ of the first dummy current load 51 and the resistance value $R_2$ of the second dummy current load 54 for generating the above $I_1$ and $I_2$ is described. As illustrated in FIG. 2, one of the voltage lines and the neutral line are connected to the dummy output system 50, and 100VAC is provided. Therefore, the resistance values $R_1$ and $R_2$ for producing the above $I_1$ and $I_2$ are found respectively by the following formulae.

$$R_1 = 100/0.52 = 2.0 \times 10^3 [\Omega] \quad \text{Formula (3)}$$

$$R_2 = 100/0.01 = 1.0 \times 10^4 \, [\Omega] \quad \text{Formula (4)}$$

The dummy current values $I_1$ and $I_2$ and the resistance values $R_1$ and $R_2$ found by the above formulae are merely one embodiment, and as obvious from Formulae (1) through (4), various parameters can be selected depending on the number of turns of the dummy output wire 61, the dummy current value (equivalent to the output power value) to be supplied to the current sensor, or the like. For example, the dummy output wire 61 is not always have to be wound around the current sensor 40 more than once, and the current equivalent to the dummy current flowing through the dummy output system 50 may be detected by the current sensor 40. In this case, in each formula, calculation may be made assuming that the number of turns (n) of the dummy output wire 61 is 1.

An example of control in the power control system according to this embodiment is described in detail below with reference to drawings.

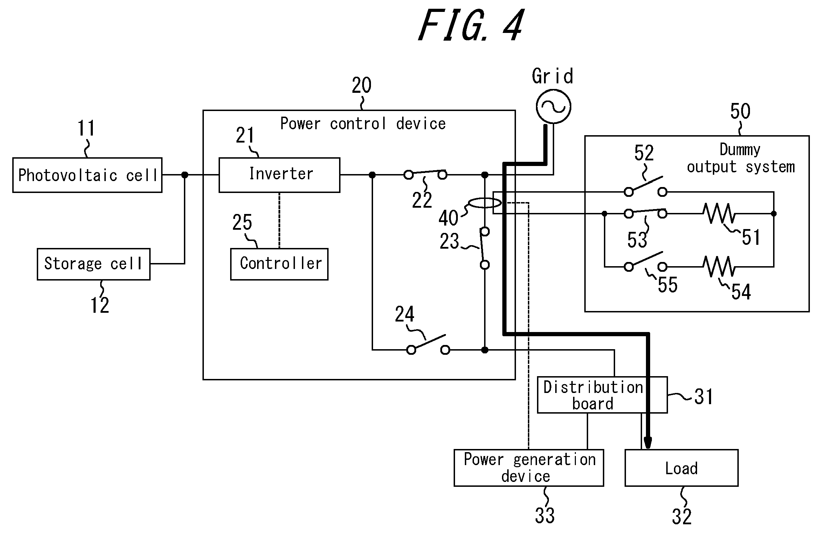

FIG. 4 is a diagram illustrating an example of control of the power control system during interconnected operation. In this case, switches of the power control device 20 are controlled so that the interconnected operation switches 22 and 23 are on and the independent operation switch 24 is off. Furthermore, switches of the dummy output system 50 are controlled so that the synchronous switch 52 is off and the first dummy current control switch 53 and the second dummy current control switch 55 are on or off depending on the amount of charge of the storage cell 12.

During interconnected operation, as indicated by the bold arrow in FIG. 4, 100 VAC (or 200 VAC) is supplied by the grid and fed to the load 32. When charging of the storage cell 12 is not complete, the power control device 20 converts the AC power from the grid into DC power and charges the storage cell 12. Furthermore, the power control device 20 can convert the power generated by the photovoltaic cell 11 into AC power and send the AC power to the grid by reverse power flow and can also sell surplus power. Although the power control device 20 may also output the power from the grid and the power from the distributed power sources (the photovoltaic cell 11 and the storage cell 12) to the dummy power system 50, the synchronous switch 52 is off during interconnected operation, thus dummy current is not supplied to the current sensor 40. The forward power flow (current in the power buying direction) flows from the grid into the current sensor 40, and therefore, the power generation device 33 generates power and supplies the power to the load 32 through the distribution board 31.

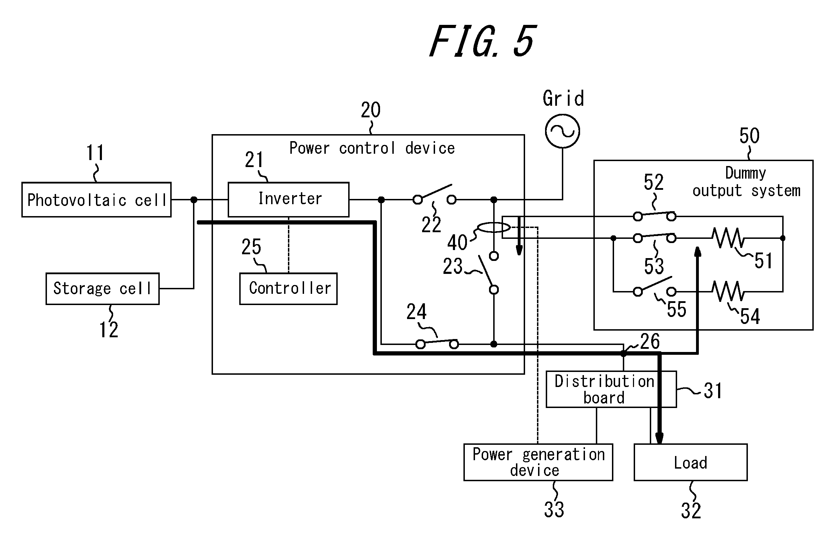

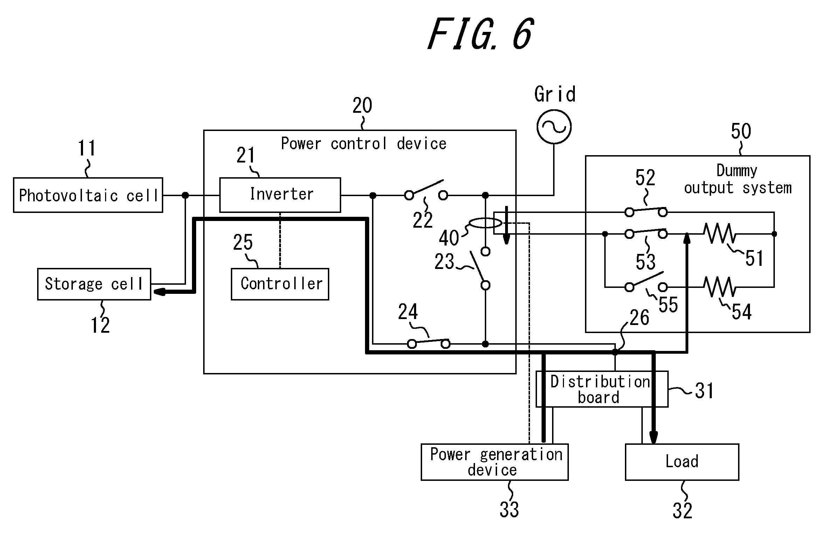

Next, examples of control in the power control system during independent operation are described with reference to FIGS. 5 and 6. In FIGS. 5 and 6, charging of the storage cell 12 is not complete yet. In this case, switches of the power control device 20 are controlled so that the interconnected operation switches 22 and 23 are off and the independent operation switch 24 is on. Furthermore, switches of the dummy output system 50 are controlled so that the synchronous switch 52 is on, the first dummy current control switch 53 is on and the second dummy current control switch 55 is off.

FIG. 5 is a diagram illustrating power supply by the distributed power source during independent operation. During independent operation, the power of the distributed power sources (the photovoltaic cell 11 and the storage cell 12) is output by the power control device 20 to the load 32 and the dummy output system 50 via the independent operation switch 24.

FIG. 6 is a diagram illustrating power generation by the power generation device 33 using dummy current during independent operation. As illustrated in FIG. 6, when power generation is performed by the power generation device 33 during independent operation, power is supplied to the dummy output system 50 by the power generation device 33. Then, a portion of the power supplied to the dummy output system 50 is supplied to the current sensor 40 as dummy current. At this time, since the current sensor 40 detects forward power flow (current in the power buying direction), the power generation device 33 generates power with a load following operation or a rated operation. The distribution board 31 supplies the power generated by the power generation device 33 to the load 32 and supplies surplus power that exceeds the power consumed by the load 32 to the power control device 20. The surplus power is converted into DC power by the inverter 21 via the independent operation switch 24 in the power control device 20, and is fed to the storage cell 12.

According to this embodiment, the power control device 20 thus has a dummy output system 50 capable of supplying power from the power generation device 33 or the other distributed power sources while the power generation device 33 and the other distributed power sources (the photovoltaic cell 11 and the storage cell 12) are disconnected from the grid and the independent operation switch is on, and by the output from the dummy output system 50, dummy current in the same direction as the forward power flow can be supplied to the current sensor 40. Thus, it is possible to manage efficient operation control among a plurality of distributed power sources without impairing the versatility of the distributed power source side. In greater detail, during independent operation, it is possible to allow the power generation device 33 to generate power by passing dummy current through the current sensor 40. Furthermore, since dummy current to the current sensor 40 is used to control power generation of the power generation device 33, an advantage is offered in that a general-purpose fuel cell system and a gas power generation system may be used without the need to make any specific changes to the power generation device 33 itself.

According to this embodiment, the synchronous switch 52 switches between disconnection from and parallel connection with the grid synchronously, and passes dummy current during disconnection and does not pass dummy current during parallel connection. Thus, dummy current passes through the current sensor 40 during independent operation when disconnected from the grid, and on the other hand, dummy current does not pass through the current sensor 40 during interconnected operation when connected in parallel with the grid, thereby preventing the power generation device 33 from generating reverse power flow by mistake.

Furthermore, according to this embodiment, the independent operation switch 24 is off during interconnected operation and is on during independent operation by the distributed power sources, and is disposed between the power generation device 33 and the other distributed power sources (the photovoltaic cell 11 and the storage cell 12), and as a result, during independent operation, the power generated by the power generation device 33 can be supplied to the other distributed power source side via the independent operation switch 24.

Moreover, the storage cell 12 can be charged with power from the power generation device 33 when the independent operation switch 24 is turned on. Thus, during independent operation, the power generated by the power generation device 33, that is, for example, the surplus power that exceeds the power consumed by the load 32, can be stored in the storage cell 12.

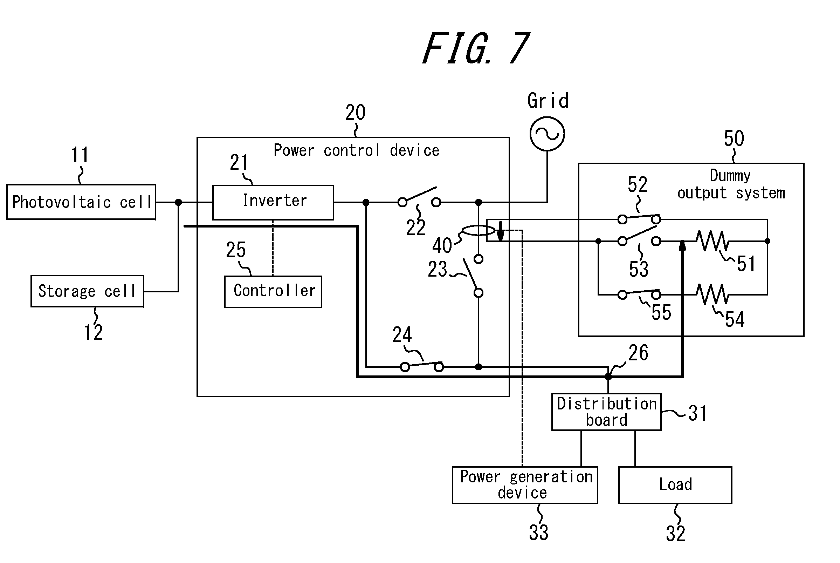

FIG. 7 is a diagram illustrating an example of control of the power control system during independent operation when charging of the storage cell 12 is complete. In this case, the switches in the power control device 20 are controlled so that the interconnected operation switches 22 and 23 are off and the independent operation switch 24 is on. Furthermore, the switches in the dummy output system 50 are controlled so that the synchronous switch 52 is on, the first dummy current control switch 53 is off and the second dummy current control switch 55 is on.

When charging of the storage cell 12 is complete, the first dummy current control switch 53 is off and the second dummy current control switch 55 is on, thus, during independent operation, the dummy current generated by the power supplied from the power control device 20 or the power generation device 33 to the dummy output system 50 is small, which is 20W in terms of output power. Therefore, since only the forward power flow of the control target value (35W) or less is detected in the current sensor 40, the power generation device 33 gradually decreases the amount of power generation and eventually suspends power generation. Thus, excessive current is not output to the storage cell 12. However, since the current sensor 40 detects a little forward power flow, it is not determined as a wrong connection of the current sensor 40, and an error may not occur.

In this way, according to this embodiment, the first dummy current control switch 53 and the second dummy current control switch 55 are controlled to generate only dummy current that is smaller than the threshold that can be generated by the power generation device 33 upon completion of charging the storage cell 12, thus generation of more power than is necessary by the generation device 33 can be prevented.

Furthermore, according to this embodiment, a little dummy current is flown even after charging of the storage cell 12 is complete, thus it is not determined as a wrong connection of the current sensor 40, and an error may not occur.

As illustrated in FIGS. 1 and 4 through 7, it is preferred that, in the power control device 20, the current sensor 40 is disposed on a position where current generated by the power generation device 33 does not flow during independent operation. This is because, when the current sensor 40 is disposed on a position where current generated by the power generation device 33 flows, dummy current that causes the power generation device 33 to generate power is needed to be output with power exceeding current generated by the power generation, and the power consumption relating to the dummy current may increase. That is, in the power control device 20, the current sensor 40 is disposed on a position where the current generated by the power generation device 33 does not flow during independent operation, and as a result, power consumption relating to dummy current can be decreased.

In this embodiment, although two dummy current control switches are exclusively controlled so that only either one of them is turned on, this disclosure is not limited to this embodiment. A third dummy current may be set by simultaneously turning on both of the dummy current control switches.

(Second embodiment)

In the second embodiment of this disclosure, it is assumed that the power generation device 33 starts generating power only at, for example, 200W (a predetermined value Y), which is larger than the above-described control target value (35W: a predetermined value X). That is, assuming that the power generation device 33 is a fuel cell, since power generation efficiency of the fuel cell is low when output is low, thus the threshold for starting power generation is raised to about 200W. In this case, in FIGS. 1, 2 and 3 through 7, another set of dummy current load and dummy current control switch connected in series is added, and a third dummy current value is provided.

That is, when power generation is started, both of the dummy current control switches 53 and 55 are turned off, and the third dummy current control switch is turned on, thereby supplying dummy current of 200W (a predetermined value Y) or more, for example, 300W. The third dummy current value $I_3$ required for this is $I_3 = 300/200/10 = 0.15[A]$, and the third dummy current load value $R_3$ can be about $R_3 = 100/0.15 = 6.67 \times 10^2[\Omega]$. After power generation is started, the third dummy current control switch is turned off and the second dummy current control switch 55 is turned on, and as a result of this, operation proceeds to the operation that is similar to the first embodiment. Operation after full charge is the same as that of the first embodiment.

(Other embodiment)

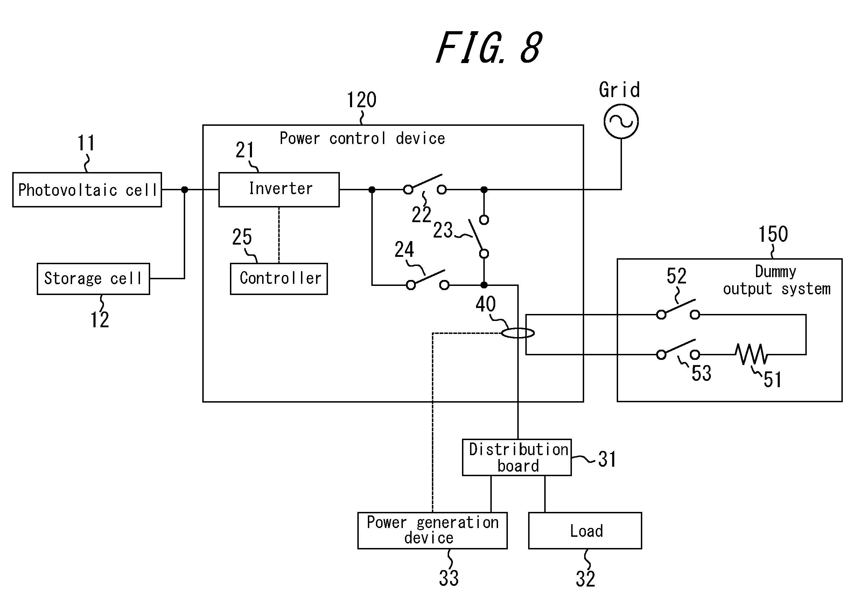

FIG. 8 is a block diagram illustrating a schematic configuration of the power control system according to the other embodiment. The power control system according to the other embodiment includes a photovoltaic cell 11, a storage cell 12, a power control device 120, a distribution board 31, a load 32, a power generation device 33, a current sensor 40 and a dummy output system 150. Compared to the embodiment illustrated in FIG. 1, in this embodiment, the current sensor 40 is disposed between the interconnected operation switch 23 and the distribution board 31, and the second dummy current load 54 and the second dummy current control switch 55 are not used, and in the following description, the same description as that in FIG. 1 is omitted.

Here, in the power control system according to the other embodiment, when it is desired for the power generation device 33 to start power generation, current (dummy current) flowing in the same direction as the dummy forward power flow is supplied to the current sensor 40 via the dummy output system 150, and as a result, the power generation device 33 can perform a rated operation, and the power generated by the power generation device 33 can be stored in the storage cell 12.

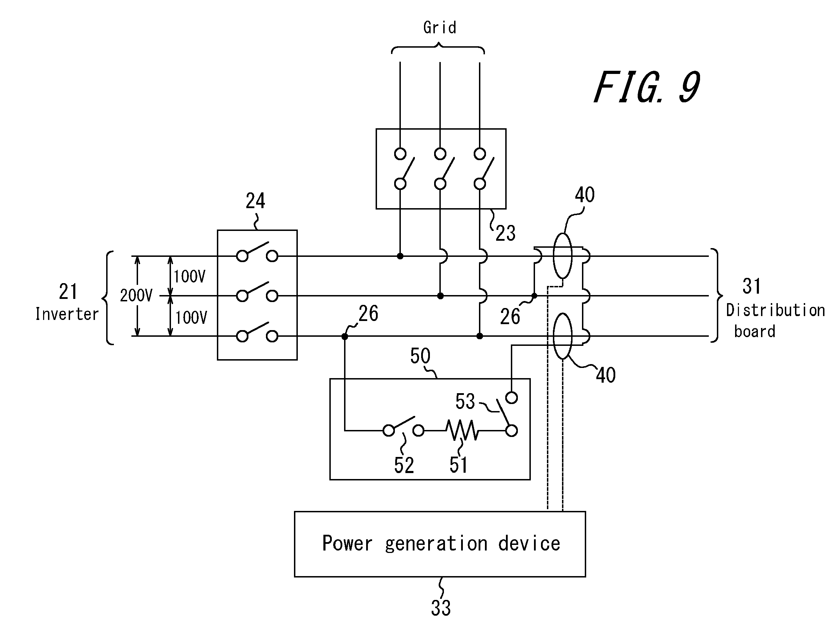

The dummy output system 150 can supply dummy current, which is current in the same direction as the forward power flow, to the current sensor 40. The dummy output system 150 is fed by the output portion 26 of the power control device 120 or the power generation device 33, and includes the dummy current load 51, the synchronous switch 52 and the dummy current control switch 53. FIG. 9 is a diagram illustrating wiring of the dummy output system 150. In FIG. 9, the power line from the distributed power source is a 200 V, single-phase three-wire system. In this case, one of the voltage lines and the neutral line are connected to the dummy output system 150. As illustrated, the connection lines to the dummy output system 150 are wired so that they pass through the current sensors 40 provided respectively at two voltage lines. The dummy output system 150 may be configured integrally with the power control device 120 or be independent from the power control device 120.

The dummy current load 51 is a load appropriately provided to adjust current inside the dummy output system 150. As a dummy current load 51, the load outside the dummy output system 150 may be used. The synchronous switch 52 is for supplying a portion of power supplied from the power control device 120 or the power generation device 33 to the dummy output system 150 to the current sensor 40 as dummy current in the same direction as the forward power flow. The dummy current control switch 53 is for preventing unnecessary power generation due to dummy current. The synchronous switch 52 and the dummy current control switch 53 are configured respectively by the independent relay, transistor, or the like, and are turned on/off independently by the controller 25 of the power control device 120.

As illustrated in FIGS. 8 and 9, the dummy current load 51 and the dummy current control switch 53 are connected in series, and when both the synchronous switch 52 and the dummy current control switch 53 are turned on, dummy current passes through the dummy current load 51.

The synchronous switch 52 is controlled to on/off in synchronization with the independent operation switch 24 of the power control device 120. That is, the synchronous switch 52 is off during interconnected operation and is on during independent operation, as in the case with the independent operation switch 24. In greater detail, the synchronous switch 52 switches between disconnection from/parallel connection with the grid synchronously, and dummy current flows during disconnection and dummy current does not flow during parallel connection. Synchronization control between the independent operation switch 24 and the synchronous switch 52 is implemented with hardware by having the wiring for the control signal to the independent operation switch 24 branch to the synchronous switch 52. Synchronization control between the independent operation switch 24 and the synchronous switch 52 can be implemented with software by the controller 25.

Output from the power generation device 33 can be charged in the storage cell 12 during independent operation. When charging is not complete, the dummy current control switch 53 is turned on so that a predetermined dummy current can flow. On the other hand, when charging of the storage cell 12 is complete, the dummy current control switch 53 is turned off so that dummy current cannot flow. The controller 25 may be configured to determine whether charging is complete or not based on communication with the storage cell 12.

Here, setting of dummy current value according to this embodiment is described below. The rated power value of the power generation device 33 in the power control system of this embodiment is 700W. However, in FIGS. 8 and 9, when the power generation device 33 outputs power of 700W, the current sensor 40 detects reverse power flow corresponding to the output power of 700W.

Thus, in this embodiment, the system is configured so that power is supplied from the power control device 120 or the power generation device 33 to the dummy output system 150, and dummy current to cancel the reverse power flow detected by the current sensor 40 is flown. That is, the system is configured so that dummy current equivalent to the output power of 735W or more is generated, and as a result, the current sensor 35 detects forward power flow of 35W or more in terms of output power.

In this embodiment, it is assumed that the dummy current equivalent of the output current of 800W, which is larger than 735W, is generated. Suppose that the output voltage of the distributed power source is 200 VAC and the number of turns of the dummy output wire 61 wound around the current sensor is 80, the dummy current $I_3$ to be produced by the dummy output system is calculated by the following formula.

$$I_3 = 800/200/80 = 0.05[\text{A}] \quad \text{Formula (5)}$$

Next, the determination method of resistance value $R_3$ for generating the above $I_3$ is described. As illustrated in FIG. 9, one of the voltage lines and the neutral line are connected to the dummy output system 150 and voltage of 100 VAC is provided. Therefore, the resistance value $R_3$ to generate the above $I_3$ is calculated by the following formula.

$$R_3 = 100/0.05 = 2.0 \text{ x } 10^3 \, [\Omega] \quad \text{Formula (6)}$$

The dummy current value $I_3$ and the resistance value $R_3$ calculated by the above formula are merely one embodiment, and various parameters can be selected depending on the number of turns of the dummy output wire 61 and the dummy current value (equivalent of the output current value) to be supplied to the current sensor, or the like.

An example of control in the power control system according to this embodiment is described in detail below with reference to the drawings.

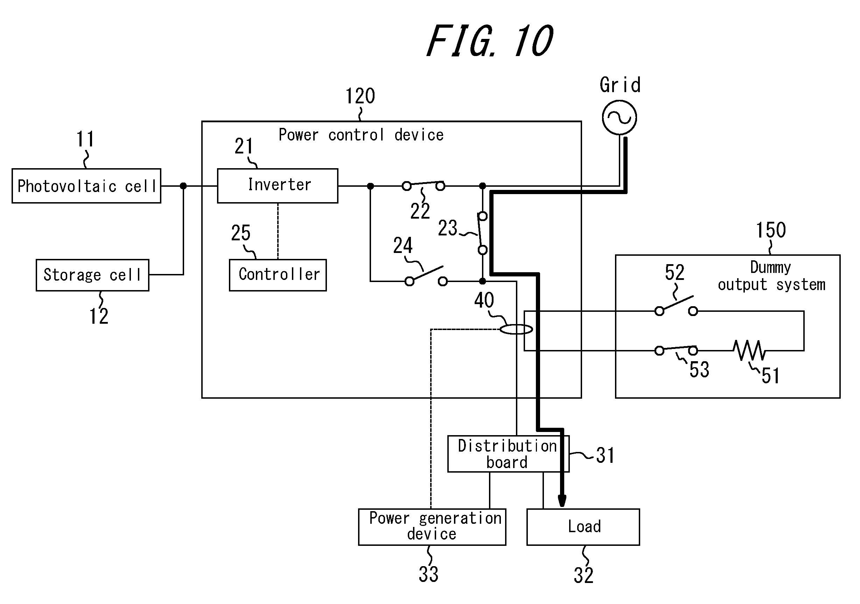

FIG. 10 is a diagram illustrating an example of control of the power control system during interconnected operation. In this case, the switches in the power control device 120 are controlled so that the interconnected operation switches 22 and 23 are on and the independent operation switch 24 is off. Furthermore, the switches in the dummy output system 150 are controlled so that the synchronous switch 52 is off and the dummy current control switch 53 is on or off depending on the amount of charge in the storage cell 12.

During interconnected operation, as indicated by the fold arrow, 100 VAC (or 200VAC) is supplied by the grid and fed to the load 32. When charging of the storage cell 12 is not complete, the power control device 120 converts the AC power from the grid to DC power and charges the storage cell 12. Furthermore, the power control device 120 can convert the power generated by the photovoltaic cell 11 into AC power and send the AC power to the grid by reverse power flow and can also sell surplus power. The power control device 120 is configured to output the power from the grid and the power from the distributed power sources (the photovoltaic cell 11 and the storage cell 12) to the dummy output system 150. However, since the synchronous switch 52 is off during interconnected operation, dummy current is not supplied to the current sensor 40. Since forward power flow from the grid (current in the power buying direction) flows to the current sensor 40, the power generation device 33 generates power and supplies the power to the load 32 via the distribution board 31.

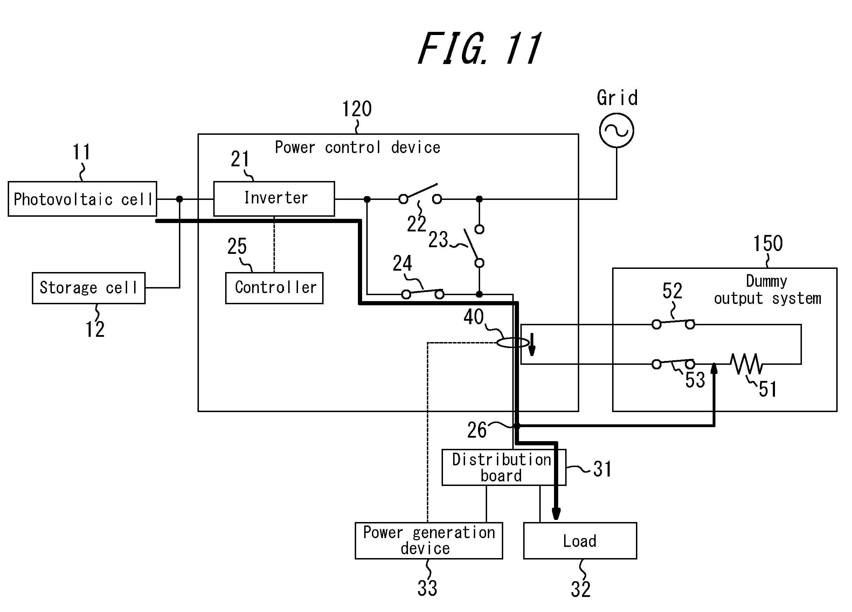

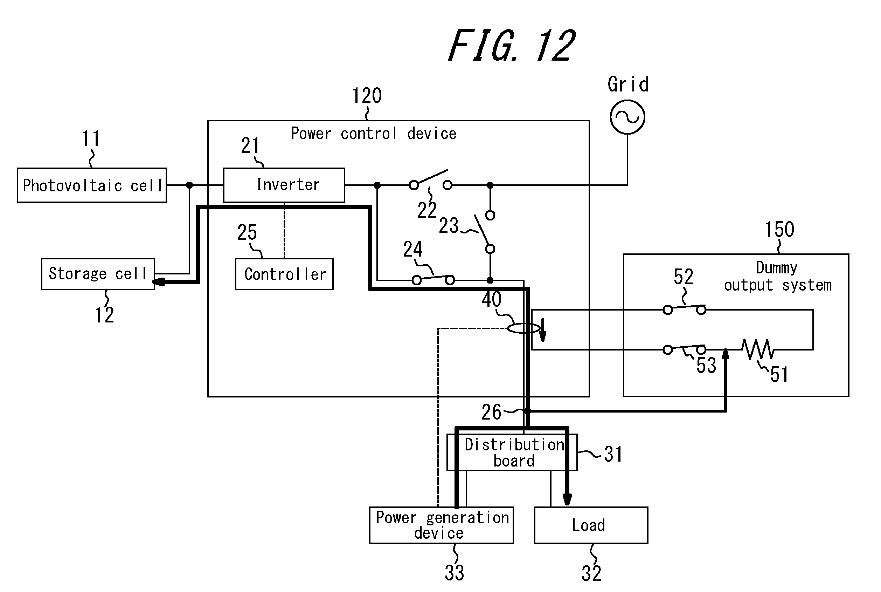

Next, an example of control of the power control system during independent operation is described with reference to FIGS. 11 and 12. In FIGS. 11 and 12, suppose that charging of the storage cell 12 is not complete, the switches in the power control device 120 are controlled so that the interconnected operation switches 22 and 23 are on, and the independent operation switch 24 is off. Furthermore, the switches in the dummy output system 150 are controlled so that the synchronous switch 52 is on and the dummy current control switch 53 is on.

FIG. 11 is a diagram illustrating power supply by the distributed power sources during independent operation. During independent operation, the power control device 120 outputs power of the distributed power sources (the photovoltaic cell 11 and the storage cell 12) to the load 32 and the dummy output system 150 via the independent operation switch 24.

FIG. 12 is a diagram illustrating power generation by the power generation device 33 by dummy current during independent operation. As illustrated in FIG. 12, when the power generation device 33 generates power during independent operation, power is supplied to the dummy output system 150 by the power generation device 33. Then, a portion of the power supplied to the dummy output system 150 is supplied to the current sensor 40 as dummy current. At this time, since the current sensor 40 detects forward power flow (current in the power buying direction) that cancels reverse power flow from the power generation device 33 by dummy current, the power generation device 33 generates power with a load following operation or a rated operation. The distribution board 31 supplies the power generated by the power generation device 33 to the load 32 and supplies surplus power that exceeds the power consumed by the load 32 to the power control device 120. In the power control device 120, the surplus power passes through the independent operation switch 24, is converted to DC power by the inverter 21, and is fed to the storage cell 12.

According to this embodiment, the power control device 120 thus includes the dummy output system 150 that, while the power generation device 33 and the other distributed power sources (the photovoltaic cell 11 and the storage cell 12) are disconnected from the grid and the independent operation switch is on, can supply power from the power generation device 33 or the other distributed power sources, and can supply the dummy current that cancels the reverse power flow from the power generation device 33 detected by the current sensor 40 from the dummy output system 150. As a result, it is possible to manage efficient operation control among a plurality of distributed power sources without impairing the versatility of the distributed power sources. In greater detail, during independent operation, dummy current is passed through the current sensor 40, and as a result, the power generation device 33 can generate power. Furthermore, since power generation by the power generation device 33 is controlled by using dummy current to the current sensor 40, an advantage is offered in that a general-purpose fuel cell system and a gas power generation system may be used without the need to make any specific changes to the power generation device 33 itself.

Furthermore, according to this embodiment, the synchronous switch 52 switches between disconnection from and parallel connection with the grid synchronously, passes dummy current when disconnected from the grid and does not pass dummy current when connected to the grid. As a result, dummy current flows to the current sensor 40 during independent operation in which the system is disconnected from the grid, whereas dummy current does not flow to the current sensor 40 during interconnected operation in which the system is connected in parallel with the grid, so that reverse power flow from the power generation device 33 does not mistakenly occur.

According to this embodiment, the independent operation switch 24 turns off during interconnected operation and turns on during independent operation via the distributed power sources, and is disposed between the power generation device 33 and the other distributed power sources (the photovoltaic cell 11 and the storage cell 12). As a result, during independent operation, the power generated by the power generation device 33 can be supplied to the other distributed power source side via the independent operation switch 24.

Furthermore, the storage cell 12 can be charged with power from the power generation device 33 when the independent operation switch 24 is turned on. As a result, during independent operation, surplus power that is generated by the power generation device 33 and exceeds the power consumption by the load 32, for example, can be stored in the storage cell 12.

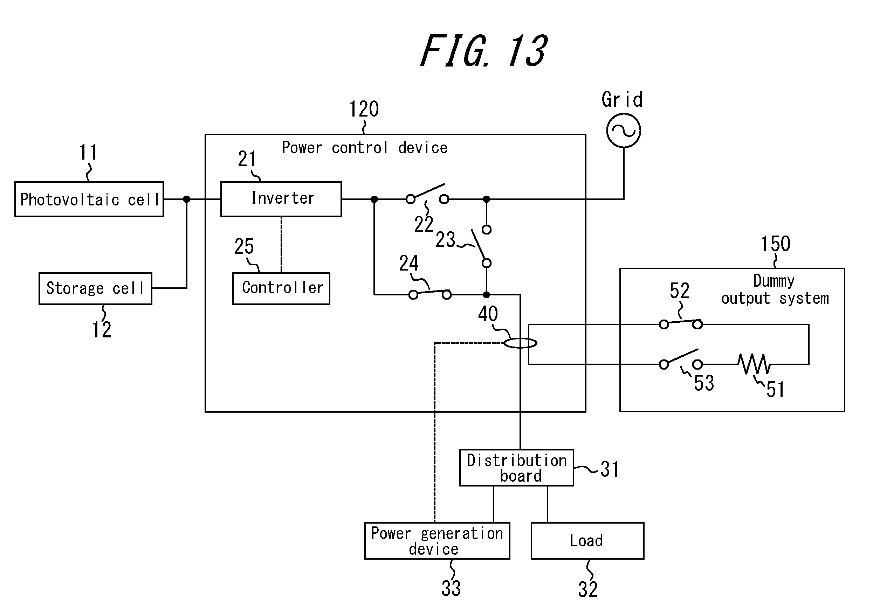

FIG. 13 is a diagram illustrating an example of control in the power control system during independent operation when charging of the storage cell 12 is complete. In this case, the switches in the power control device 120 are controlled so that the interconnected operation switches 22 and 23 are off and the independent operation switch 24 is on. Furthermore, the switches in the dummy output system are controlled so that the synchronous switch 52 is on and the dummy current control switch 53 is off.

When charging of the storage cell 12 is complete, the dummy current control switch 53 is off. Therefore, during independent operation, it is not that case that a portion of the power supplied from the power control device 120 to the dummy output system 150 is supplied to the current sensor 40 as dummy current. Forward power flow from the grid and dummy current are thus no longer detected in the current sensor 40, and therefore the power generation device 33 suspends power generation. Hence, more current than is necessary is not output to the storage cell 12.

According to this embodiment, the dummy current control switch 53 thus suspends dummy current once charging of the storage cell 12 is complete, and as a result, generation of more power than necessary by the power generation device 33 can be prevented.

Although this disclosure has been described with reference to the accompanying drawings and embodiments, it is to be noted that various changes and modifications will be apparent to those skilled in the art based on this disclosure. Therefore, such changes and modifications are to be understood as included within the scope of this disclosure. For example, the functions and the like included in the members, means, steps, and the like may be reordered in any logically consistent way. Furthermore, means, steps, and the like may be combined into one or divided.

Much of the subject matter in this disclosure is indicated as a series of operations executed either by a computer system that can execute program instructions or by other hardware. Examples of a computer system and other hardware include a versatile computer, a personal computer (PC), a dedicated computer, a workstation, a Personal Communications System (PCS), an RFID receiver, an electronic notepad, a laptop computer, a Global Positioning System (GPS) receiver, or other programmable data processing device. In each embodiment, a variety of operations are executed by a dedicated circuit (for example, individual logical gates interconnected in order to execute a particular function) implemented by program instructions (software), or by a logical block, a program module, or the like executed by one or more processors. The one or more processors that execute a logical block, a program module, or the like are, for example, one or more of microprocessor, central processing unit (CPU), Application Specific Integrated Circuit (ASIC), Digital Signal Processor (DSP), Programmable Logic Device (PLD), Field Programmable Gate Array (FPGA), processor, controller, microcontroller, microprocessor, electronic device, other device designed to be capable of executing the functions disclosed herein, and/or a combination of any of the above. The embodiments disclosed herein are, for example, implemented by hardware, software, firmware, middleware, microcode, or a combination of any of these. The instructions may be a program code or a code segment for executing the necessary tasks. The instructions may be stored on a machine-readable, non-transitory storage medium or other medium. The code segment may indicate a combination of any of the following: procedures, functions, subprograms, programs, routines, subroutines, modules, software packages, classes, instructions, data structures, or program statements. The code segment may transmit and/or receive information, data arguments, variables, or memory content to or from another code segment or hardware circuit in order for the code segment to connect to another code segment or hardware circuit.

The network used herein includes, unless otherwise noted, internet, ad hoc network, Local Area Network (LAN), cellular network, Wireless Personal Area Network (WPAN) or other networks or a combination of any of these. Wireless network component includes, for example, access point (e.g. Wi-Fi access point), femtocell, or the like. Furthermore, a wireless communication device can be connected to Wi-Fi, Bluetooth®, cellular communication technology (e.g. Code Division Multiple Access (CDMA), Time Division Multiple Access (TDMA), Frequency Division Multiple Access (FDMA), Orthogonal Frequency Division Multiple Access (OFDMA), Single-Carrier Frequency Division Multiple Access (SC-FDMA) or wireless network that employs other wireless technology and/or technology standard.

Furthermore, the machine-readable, non-transitory storage medium used here can be configured as a computer readable, tangible carrier (medium) configured in the category of solid state memory, magnetic disc and optical disc, and an appropriate set of computer instructions such as program module that causes a processor to execute the technology disclosed herein and data structure are stored in the medium. Computer readable medium includes electrical connection including one or more wires, magnetic disc storage medium, magnetic cassette, magnetic tape, other magnetic and optical storage device (e.g. Compact Disk (CD)), laser disc®, Digital Versatile Disc (DVD®), floppy® disc and blu-ray disc®, portable computer disc, rewritable and programmable ROM such as Random Access Memory (RAM), Read-Only Memory (ROM), EPROM, EEPROM or flash memory, or the like, or other tangible storage medium that can store information or a combination of any of the above. The memory can be provided inside and/or outside of processor/processing unit. The term, "memory," as used herein refers to all kinds of long-term memory, short-term memory, volatile, non-volatile memory and other memories, and the type, the number of memories and the type of medium in which a memory is stored are not limited.

Here, a system that has various modules and/or units that execute specific function is disclosed, and it is to be noted that, these modules and units are schematically indicated to illustrate their functionality in a simple manner, and are not necessarily indicate a specific hardware and/or software. In that sense, these modules, units and other components can be any hardware and/or software that are implemented to practically execute the specific function described herein. Various functions of different components may be configured by combining or separating any of hardware and/or software. Furthermore, input/output or I/O device or user interface including keyboard, display, touch screen, pointing device, or the like, but not limiting thereto, can be connected to a system directly or via an I/O controller. Thus, various subject matters of this disclosure can be executed in various different modes, and these modes are all included in the scope of this disclosure.

REFERENCE SIGNS LIST

| 11 | Photovoltaic cell |
| 12 | Storage cell |
| 20, 120 | Power control device |
| 21 | Inverter |
| 22, 33 | Interconnected operation switch |
| 24 | Independent operation switch |
| 25 | Controller |
| 26 | Output portion |
| 31 | Distribution board |
| 32 | Load |
| 33 | Power generation device |
| 40 | Current sensor |
| 50, 150 | Dummy output system |
| 51 | (First) dummy current load |
| 52 | Synchronous switch |
| 53 | (First) dummy current control switch |
| 54 | Second dummy current load |
| 55 | Second dummy current control switch |
| 60 | Grid power line |
| 61 | Dummy output wire |

**Claims**

1. A power control system having a power generation device that generates power while a current sensor detects forward power flow, the power control system comprising:

a power control device having an output portion capable of outputting power from other distributed power sources while the power generation device and the other distributed power sources are disconnected from a grid; and a dummy output system capable of supplying dummy current that can be detected by the current sensor as current in the same direction as forward power flow by output from at least one of the output portion and the power generation device,

the power control system further comprising:

an independent operation switch that is disposed between the power generation device and the other distributed power sources, and is turned off during interconnected operation and is turned on during independent operation by the distributed power sources; and
a synchronous switch that passes the dummy current in synchronization with the independent operation switch while the independent operation switch is turned on.

2. The power control system according to claim 1, wherein the distributed power sources include a storage cell; the dummy output system is configured to select at least two values of dummy current and supply; and when the storage cell is fully charged, among the at least two values of dummy current, a small current value is selected.

3. The power control system according to claim 2, wherein, among the at least two values of dummy current, a large current value $i_1$[A] satisfies a relation of $i_1 > X/(Vg)$ (Vg is output voltage [V] from the power generation device) with a predetermined value X[W] specified by a characteristic of the power generation device, and a small current value $i_2$[A] satisfies a relation of $i_2 < X/(Vg)$ with the predetermined value X[W].

4. The power control system according to claim 2, wherein,
the dummy current is supplied to the current sensor by winding the current sensor with a wire by a predetermined number n of turns [times], through the wire the dummy current being supplied in the dummy output system;
among the at least two values of dummy current, a large current value $i_1$[A] satisfies a relation of $i_1 > X/(n \bullet Vg)$ (Vg is output voltage [V] from the power generation device) with a predetermined value X[W] specified by a characteristic of the power generation device; and
a small current value $i_2$[A] satisfies a relation of $i_2 < X/(n \bullet Vg)$ with the predetermined value X[W].

5. The power control system according to any one of claims 2 to 4, wherein the dummy output system is configured by connecting in parallel two or more combinations of a resistance and a switch connected in series.

6. The power control system according to claim 2, wherein
the at least two values of dummy current have three values of dummy current values; and
among the three values of dummy current,

a largest current value $i_3$[A] satisfies a relation of $i_3 > Y/(Vg)$ (Vg is output voltage [V] from the power generation device) with a predetermined value Y[W] specified by a power generation starting current value of the power generation device;
a second largest current value $i_1$[A] satisfies a relation of $i_1 > X/(Vg)$ and $i_1 < Y/(Vg)$ with a predetermined value X[W] specified by the characteristic of the power generation device and the predetermined value Y[W]; and
a smallest current value $i_2$[A] satisfies a relation of $i_2 < X/(Vg)$ with the predetermined value X[W].

7. The power control system according to claim 6, wherein
the dummy current is supplied to the current sensor by winding the current sensor with a wire by a predetermined number n of turns [times], through the wire the dummy current being supplied in the dummy output system;
the at least two values of dummy current have three values of dummy current values; and
among the three values of dummy current,

a largest current value $i_3$[A] satisfies a relation of $i_3 > Y/(n \bullet Vg)$ (Vg is output voltage [V] from the power generation device) with a predetermined value Y[W] specified by the power generation starting current value of the power generation device;
a second largest current value $i_1$[A] satisfies a relation of $i_1 > X/(n \bullet Vg)$ and $i_1 < Y/(n \bullet Vg)$ with a predetermined value X[W] specified by the characteristic of the power generation device and the predetermined value Y[W]; and
a smallest current value $i_2$[A] satisfies a relation of $i_2 < X/(n \bullet Vg)$ with the predetermined value X[W].

8. A power control device used in a power control system having a power generation device that generates power while a current sensor detects forward power flow and other distributed power sources; comprising:

an output portion capable of outputting power from the other distributed power sources while the power generation device and the other distributed power sources are disconnected from a grid, wherein dummy current in a same direction as forward power flow can be supplied to the current sensor by output from at least one of the output portion and the power generation device;
an independent operation switch that is turned off during interconnected operation and turned on during independent operation by the distributed power sources, wherein the independent operation switch is disposed between the power generation device and the other distributed power sources; and
a controller that controls synchronously with the independent operation switch to pass dummy current while the independent operation switch is on.

9. A method for controlling a power control system that has a power generation device that generates power while a current sensor detects forward power flow and other distributed power sources, the method comprising the steps of:

outputting power from the other distributed power sources while the power generation device and the other distributed power sources are disconnected from a grid;
supplying dummy current to the current sensor by output from at least one of the power generation device and the other distributed power sources, the dummy current flowing in a same direction as the forward power flow;

turning off an independent operation switch disposed between the power generation device and the other distributed power sources during interconnected operation;
turning on the independent operation switch during independent operation; and
turning on a synchronous switch for passing dummy current while the independent operation switch is on.

# FIG. 1

# FIG. 2

# FIG. 3

*FIG. 4*

## FIG. 5

EP 3 079 216 A1

# FIG. 6

EP 3 079 216 A1

# FIG. 7

Grid

Dummy output system 50

51
54
55
52
53

Power control device 20

Inverter 21
Controller 25
40
22
23
24
26

Distribution board 31

Load 32

Power generation device 33

Photovoltaic cell 11

Storage cell 12

# FIG. 8

EP 3 079 216 A1

*FIG. 9*

Grid

23

24

100V
100V
200V

21
Inverter

31
Distribution board

40

40

26

26

50

53
51
52

33
Power generation device

# FIG. 10

# FIG. 11

EP 3 079 216 A1

# FIG. 12

EP 3 079 216 A1

FIG. 13

EP 3 079 216 A1

# EP 3 079 216 A1

## INTERNATIONAL SEARCH REPORT

| International application No. |
| --- |
| PCT/JP2014/006025 |

**A. CLASSIFICATION OF SUBJECT MATTER**
*H02J3/38(2006.01)i, H02J3/32(2006.01)i, H02J7/35(2006.01)i*

According to International Patent Classification (IPC) or to both national classification and IPC

**B. FIELDS SEARCHED**

Minimum documentation searched (classification system followed by classification symbols)
H02J3/38, H02J3/32, H02J7/35

Documentation searched other than minimum documentation to the extent that such documents are included in the fields searched
Jitsuyo Shinan Koho          1922-1996   Jitsuyo Shinan Toroku Koho   1996-2015
Kokai Jitsuyo Shinan Koho   1971-2015   Toroku Jitsuyo Shinan Koho   1994-2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2011-188607 A  (Seiko Electric Co., Ltd.), 22 September 2011 (22.09.2011), paragraphs [0027], [0031]; fig. 1 (Family: none) | 1-9 |
| A | WO 2013/015374 A1  (Kyocera Corp.), 31 January 2013 (31.01.2013), paragraphs [0025], [0026]; fig. 1 & US 2014/0152097 A1    & EP 2738902 A1 | 1-9 |
| A | WO 2008/041311 A1  (Otaki Gas Co., Ltd.), 10 April 2008 (10.04.2008), paragraph [0013]; fig. 1 (Family: none) | 1-9 |

| ☒  Further documents are listed in the continuation of Box C. | ☐  See patent family annex. |
| --- | --- |

\*      Special categories of cited documents:
"A"    document defining the general state of the art which is not considered   to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search 30 January 2015 (30.01.15) | Date of mailing of the international search report 10 February 2015 (10.02.15) |
| --- | --- |
| Name and mailing address of the ISA/ Japan Patent Office 3-4-3,Kasumigaseki,Chiyoda-ku, Tokyo 100-8915,Japan | Authorized officer  Telephone No. |

Form PCT/ISA/210 (second sheet) (July 2009)

30

**INTERNATIONAL SEARCH REPORT**

International application No.

PCT/JP2014/006025

C (Continuation). DOCUMENTS CONSIDERED TO BE RELEVANT

| Category* | Citation of document, with indication, where appropriate, of the relevant passages | Relevant to claim No. |
|---|---|---|
| A | WO 2013/088798 A1 (Panasonic Corp.), 20 June 2013 (20.06.2013), paragraphs [0043], [0094]; fig. 1, 7 & JP 2013-126339 A & EP 2793345 A1 | 1-9 |
| A | JP 9-51638 A (Japan Storage Battery Co., Ltd.), 18 February 1997 (18.02.1997), paragraphs [0016], [0017]; fig. 1 (Family: none) | 1-9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013249687 A
- JP 2007049770 A

- JP 2008253033 A